# EUROPÄISCHE PATENTSCHRIFT

(11) **EP 2 899 822 B1**
(45) Veröffentlichungstag und Bekanntmachung des Hinweises auf die Patenterteilung: **25.12.2019**
(21) Anmeldenummer: 14193504.9
(22) Anmeldetag: 17.11.2014
(51) Int. Cl.: H02H 3/00, H02H 3/08, H01H 71/00

(54) **Elektrische Schutzanordnung für eine Elektroinstallation sowie dazugehöriges Verfahren**
Electrical protection assembly for an electrical installation and corresponding method
Système de protection électrique pour une installation électrique et procédé correspondant

(30) Priorität: 28.01.2014 DE 102014201505
(43) Veröffentlichungstag der Anmeldung: 29.07.2015
(73) Patentinhaber: Siemens Aktiengesellschaft, 80333 München (DE)
(72) Erfinder: Baumann, Mathias, 90513 Zirndorf (DE); Strassburger, Michael, 92266 Ensdorf (DE)

(56) Entgegenhaltungen:
- WO-A1-2005/101604
- US-A- 5 982 596
- US-B1- 6 798 630

## Beschreibung

Die vorliegende Erfindung betrifft ein System mit einer elektrischen Schutzanordnung für eine Elektroinstallation. Die elektrische Schutzanordnung umfasst eine Fehlerstromschutzvorrichtung, die eine Detektionseinrichtung zum Erfassen eines Fehlerstroms und eine Auswerteeinrichtung zum Vergleichen des erfassten Fehlerstroms mit einem Schwellenwert sowie zum Ausgeben eines Auslösesignals, falls der erfasste Fehlerstrom den Schwellenwert überschreitet, aufweist. Darüber hinaus betrifft die vorliegende Erfindung ein Verfahren zum Betreiben eines Systems mit einer elektrischen Schutzanordnung für eine Elektroinstallation.

Derartige elektrische Schutzanordnungen können beispielsweise in Gebäuden oder in Industrieanlagen verwendet werden. Diese elektrischen Schutzanordnungen können eine Fehlerstromschutzvorrichtung und einen Leistungsschalter umfassen. Fehlerstromschutzvorrichtungen, die beispielsweise als Differenzstromgeräte oder Fehlerstromgeräte ausgebildet sind, bieten in Niederspannungsnetzen einen Fehlerschutz für den Fall, dass die Basisisolierung versagt oder spannungsführende Teile direkt berührt werden. Dadurch werden Schädigungen an Menschen, Sachwerten und Nutztieren verhindert oder reduziert.

Fehlerstromschutzvorrichtungen können an übliche Leistungsschalter angebaut oder als externe, modulare Lösung realisiert werden. Alternativ können die Fehlerstromschutzvorrichtungen in Kompaktleistungsschalter integriert sein. Tritt im Betrieb der Anlage dann ein Fehlerstrom auf, wird dieser durch die Fehlerstromschutzvorrichtung detektiert, und sie löst den zuständigen (Kompakt-)Leistungsschalter aus und schaltet somit die Anlage spannungsfrei.

Bei speziellen Arten von Fehlerstromschutzvorrichtungen sind als Auslöseeinrichtung sogenannte Hilfsauslöser vorgesehen. Diese Hilfsauslöser sind elektromechanische Systeme, insbesondere auf Magnetbasis, mit denen aus einem Ansteuersignal infolge eines Fehlerstroms eine Bewegung, insbesondere für ein Schaltschloss, erzeugt werden kann. Im speziellen Fall kann ein Hilfsauslöser auch als Auslösemagnet bezeichnet werden. Je nach Funktion unterscheidet man bei den Hilfsauslösern zwischen Spannungsauslösern und Unterspannungsauslösern. Spannungsauslöser lösen aus (das heißt erzeugen eine mechanische Bewegung), wenn eine Spannungsschwelle überschritten wird. Unterspannungsauslöser lösen aus, wenn eine Spannungsschwelle unterschritten wird.

Die Fehlerstromschutzvorrichtung und der Leistungsschalter sind üblicherweise in separaten Gehäusen angeordnet. Der Leistungsschalter kann ein Gehäuse besitzen, in dem eine oder mehrere Zubehörtaschen vorgesehen sind. In eine solche Zubehörtasche kann der oben erwähnte Hilfsauslöser, ein Hilfsschalter, ein Alarmschalter oder dergleichen eingesteckt werden. Mit diesem modularen Zubehör ist also eine elektrische Schutzanordnung, die einen Leistungsschalter und eine Fehlerstromschutzvorrichtung umfassen kann, individualisierbar.

Bei bisherigen Lösungen weist die Fehlerstromschutzvorrichtung üblicherweise elektrische Kontakte auf, an denen Betriebsdaten, die einen Betriebszustand der Auswerteeinrichtung der Fehlerstromschutzvorrichtung beschreiben, abgegriffen werden können. Derartige Betriebszustände können beispielsweise eine Ausgelöst-Meldung, eine Voralarmmeldung oder dergleichen sein. Diese Meldungen können beispielsweise mittels eines Leuchtmelders auch in der Ferne angezeigt werden. Darüber hinaus ist es auch bekannt, eine Auslöseeinrichtung einer elektrischen Schutzanordnung aus der Ferne für Testauslösungen anzusteuern. Die Nutzung ist aber begrenzt, da durch maximale Leitungslängen die Reichweite begrenzt wird. Beispielsweise dürfen an elektrischen Kontakten für die Testauslösung einer Fehlerstromschutzvorrichtung verdrillte Leitungen mit einer maximalen Längen von 300 Meter angeschlossen werden.

Hierzu beschreibt die US 6 798 630 B1 eine Mensch-Maschine-Schnittstelle für eine elektronische Auslöseeinrichtung, welche eine Schnittstelle zum Zuführen von Einstellparametern aufweist. Zudem ist eine Verarbeitungseinheit vorgesehen, welche mit der Schnittstelle verbunden ist, wobei die Verarbeitungseinheit Eingänge zum Empfangen elektrischer Signale und einen Ausgang zum Liefern eines Auslösesignals an ein Auslöserelais aufweist.

Darüber hinaus ist in der WO 2005/101604 A1 eine Schutzvorrichtung für Leistungsschalter beschrieben, welche ein drahtloses Kommunikationssystem aufweist. Mit dem Kommunikationssystem können Informationen, welche Messungen der elektrischen Größen beschreiben, übertragen werden. Zudem können Informationen übertragen werden, welche die Einstellung der Parameter für die Schutzfunktionen oder eine Diagnoseinformation des elektrischen Systems, des Leistungsschalters oder der Schutzvorrichtung selbst beschreiben.

Schließlich beschreibt die US 5 982 596 A eine Lasterfassungseinheit, die über einen Kommunikationsbus mit einer Mehrzahl von Leistungsschaltern verbunden ist. Ein Benutzeranschluss und ein Serviceanschluss stellen eine Kommunikationsschnittstelle mit einem externen Computer bereit. Die Lasterfassungseinheit ist betreibbar, um den Betrieb der Leistungsschalter zu überwachen und Informationen von diesen in Form von historischen Daten herunterzuladen. Die Lasterfassungseinheit kann zudem Betriebsinformationen an die Leistungsschalter hochladen, um den Betrieb dieser zu ändern.

Es ist Aufgabe der vorliegenden Erfindung, ein System mit einer elektrischen Schutzanordnung, die eine Fehlerstromschutzvorrichtung umfasst, bereitzustellen, die einfacher und zuverlässiger betrieben werden kann.

Diese Aufgabe wird durch ein System mit den Merkmalen des Patentanspruchs 1 und durch ein Verfahren mit den Merkmalen des Patentanspruchs 9 gelöst. Vorteilhafte Weiterbildungen der vorliegenden Erfindung sind Gegenstand der abhängigen Ansprüche.

Ein erfindungsgemäßes System umfasst eine elektrische Schutzanordnung für eine Elektroinstallation. Die elektrische Schutzanordnung umfasst eine Fehlerstromschutzvorrichtung, die eine Detektionseinrichtung zum Erfassen eines Fehlerstroms und eine Auswerteeinrichtung zum Vergleichen des erfassten Fehlerstroms mit einem Schwellenwert sowie zum Ausgeben eines Auslösesignals, falls der erfasste Fehlerstrom den Schwellenwert überschreitet, aufweist und ein Kommunikationsmodul, das dazu ausgebildet ist, Fehlerstromdaten, die Informationen zu dem erfassten Fehlerstrom umfassen, zu senden und Betriebsdaten zum Einstellen eines Betriebszustands der Auswerteeinrichtung zu empfangen.

Die elektrische Schutzanordnung umfasst eine Fehlerstromschutzvorrichtung, die wiederum eine Detektionseinrichtung aufweist, mit der ein Fehlerstrom erfasst werden kann. Diese Detektionseinrichtung kann beispielsweise als Summenstromwandler ausgebildet sein. Darüber hinaus umfasst die Fehlerstromschutzvorrichtung eine Auswerteeinrichtung, also eine entsprechende Auswerteelektronik, die den erfassten Fehlerstrom mit einem Schwellenwert vergleichen kann. Falls der erfasste Fehlerstrom den vorbestimmten Schwellenwert überschreitet, wird ein Auslösesignal mittels der Auswerteeinrichtung ausgegeben. Dieses Auslösesignal kann an eine Auslöseeinrichtung ausgegeben werden, mit der eine Schalteinrichtung beziehungsweise ein Schaltschloss ausgelöst werden kann. Infolge dessen werden die elektrischen Leitungen der Elektroinstallation galvanisch getrennt.

Erfindungsgemäß umfasst die elektrische Schutzanordnung zusätzlich ein Kommunikationsmodul. Dieses Kommunikationsmodul ist zur Datenübertragung mit der Fehlerstromschutzvorrichtung, insbesondere der Auswerteeinrichtung der Fehlerstromschutzvorrichtung, verbunden. Somit können Fehlerstromdaten, die den erfassten Fehlerstrom charakterisieren, von dem Kommunikationsmodul beispielsweise an ein Kommunikationssystem gesendet werden. Darüber hinaus können mittels des Kommunikationsmoduls Betriebsdaten, mit denen ein Betriebszustand der Auswerteeinrichtung eingestellt werden kann, empfangen werden. Auf diese Weise kann die Fehlerstromschutzvorrichtung an ein Kommunikationssystem angebunden werden. Die Fehlerstromschutzvorrichtung wird somit kommunikationsfähig gemacht.

Ferner umfasst das System ein externes Kommunikationssystem. Zudem ist das Kommunikationsmodul mit dem externen Kommunikationssystem verbunden, das eine Leitwarte umfasst. Die Fehlerstromdaten und die Betriebsdaten können insbesondere als digitale Signale über einen Kommunikationsbus übertragen werden. Somit können die Produktdaten der Fehlerstromschutzvorrichtung in einer Leitwarte ausgelesen werden. Zudem kann die Fehlerstromschutzvorrichtung ausgehend von der Leitwarte bedient werden.

Des Weiteren wird die Fehlerstromschutzvorrichtung über das Kommunikationssystem mit elektrischer Energie versorgt. Auf diese Weise kann ein zuverlässiger Betrieb der Fehlerstromschutzvorrichtung garantiert werden. Dies ist insbesondere vorteilhaft, wenn die Fehlerstromschutzvorrichtung ansonsten mit elektrischer Energie aus der Elektroinstallation versorgt wird und die elektrische Verbindung in einem Fehlerfall getrennt wird.

Bevorzugt ist die Detektionseinrichtung dazu ausgebildet, eine Mehrzahl von zeitlich aufeinanderfolgenden Messwerten für den Fehlerstrom zu erfassen, und die Fehlerstromdaten umfassen die Mehrzahl von Messwerten. Beispielsweise kann der Differenzstrom zwischen zumindest zwei elektrischen Leitungen der Elektroinstallation an vorbestimmten Zeitpunkten erfasst werden. Diese Fehlerstromdaten können mittels des Kommunikationsmoduls an ein Kommunikationssystem übertragen werden und dort bereitgestellt werden. Auf diese Weise können die Messwerte auch in der Ferne bereitgestellt werden. Damit bedarf es keiner Anwesenheit vor Ort, um die Elektroinstallation zu überwachen. Wenn die elektrische Schutzanordnung in einer Anlage verwendet wird, kann diese aus der Ferne überwacht werden. Somit kann durch die Fehlerstromdaten eine rechtzeitige Vorwarnung bereitgestellt werden.

In einer weiteren Ausgestaltung umfasst die Fehlerstromschutzvorrichtung eine Stelleinrichtung zum Einstellen des Betriebszustands der Auswerteeinrichtung in Abhängigkeit von den empfangenen Betriebsdaten. Die Stelleinrichtung kann beispielsweise eine entsprechende Elektronik umfassen. Alternativ dazu kann die Stelleinrichtung entsprechende Aktoren bzw. Motoren umfassen, mit denen der Betriebszustand der Auswerteeinrichtung angepasst werden kann. Die Stelleinrichtung kann durch die empfangenen Betriebsdaten entsprechend angesteuert werden. Somit kann der Betriebszustand der Auswerteeinrichtung auf einfache Weise aus der Ferne angepasst werden.

Weiterhin ist es vorteilhaft, wenn als der Betriebszustand der Schwellenwert und/oder eine zeitliche Verzögerung, nach deren Ablauf das Auslösesignal ausgegeben wird, einstellbar sind. Auf diese Weise kann der Schwellenwert für die elektrische Stromstärke, ab deren Überschreiten ein Auslösesignal ausgegeben wird, auf einfache Weise angepasst werden. Das gleiche gilt für die zeitliche Verzögerung des Auslösesignals, die entsprechend eingestellt werden kann.

Bevorzugt umfasst die Schutzanordnung eine Auslöseeinrichtung zum Auslösen einer Schalteinrichtung, und das Kommunikationsmodul ist dazu ausgebildet, ein Steuersignal zum Auslösen der Auslöseeinrichtung zu empfangen. Auf diese Weise wird ein Funktionstest der Fehlerstromschutzvorrichtung aus der Ferne ermöglicht.

In einer weiteren Ausgestaltung ist das Kommunikationsmodul dazu ausgebildet, Zustandsgrößen, die eine Information über den aktuellen Betriebszustand der Auswerteeinrichtung umfassen, zu senden. So können beispielsweise die Einstellungen für den Schwellenwert und/oder die zeitliche Verzögerung für das Auslösesignal ausgelesen werden. Zudem kann abgefragt werden, ob die Fehlerstromschutzvorrichtung betriebsbereit ist. Somit kann eine schnellere Fehlerdiagnose durch die aktuellen Zustandsmeldungen bereitgestellt werden. Wenn die elektrische Schutzanordnung beispielsweise in einer Anlage verwendet wird, führt dies zu einer Reduzierung von Anlagenstillstandzeiten.

Weiterhin ist es vorteilhaft, wenn die elektrische Schutzanordnung einen Leistungsschalter umfasst, der eine elektrische Erfassungseinrichtung zum Erfassen eines Überstroms und/oder eines Kurzschlusses aufweist, der Leistungsschalter in einem separaten Gehäuse angeordnet ist, das eine Mehrzahl von Zubehörtaschen aufweist, und das Kommunikationsmodul in einer der Mehrzahl von Zubehörtaschen angeordnet ist. Auf diese Weise kann eine besonders bauraumsparende elektrische Schutzanordnung bereitgestellt werden.

In einer weiteren Ausgestaltung ist die Fehlerstromschutzvorrichtung über ein Datenkabel mit der elektrischen Erfassungseinrichtung des Leistungsschalters verbunden und die elektrische Erfassungseinrichtung ist mit dem Kommunikationsmodul verbunden. Wenn der Leistungsschalter über ein entsprechendes Kommunikationsmodul verfügt, das in dessen Zubehörtasche angeordnet ist, kann die Fehlerstromschutzvorrichtung über ein entsprechendes Datenkabel beziehungsweise einen Datenbus mit der elektrischen Erfassungseinrichtung, die auch als ETU (Electronic Trip Unit) bezeichnet werden kann, verbunden sein. Die elektronische Erfassungseinrichtung ist wiederum zur Datenübertragung mit dem Kommunikationsmodul verbunden. Somit kann die Fehlerstromschutzvorrichtung an ein Kommunikationssystem angebunden werden.

Das erfindungsgemäße Verfahren zum Betreiben eines Systems mit einer elektrischen Schutzanordnung für eine Elektroinstallation umfasst das Erfassen eines Fehlerstroms mit einer Detektionseinrichtung einer Fehlerstromschutzvorrichtung, das Vergleichen des erfassten Fehlerstroms mit einem Schwellenwert mit einer Auswerteeinrichtung der Fehlerstromschutzvorrichtung, das Ausgeben eines Auslösesignals, falls der erfasste Fehlerstrom den Schwellenwert überschreitet, mit der Auswerteeinrichtung, das Senden von Fehlerstromdaten, die eine Information zu dem erfassten Fehlerstrom umfassen, mit einem Kommunikationsmodul, das Empfangen von Betriebsdaten zum Einstellen eines Betriebszustands der Auswerteeinrichtung mit dem Kommunikationsmodul und das Versorgen der Fehlerstromschutzvorrichtung mit elektrischer Energie über ein externes Kommunikationssystem des Systems, wobei das externe Kommunikationssystem mit dem Kommunikationsmodul verbunden ist und eine Leitwarte umfasst.

Die vorliegend im Zusammenhang mit dem erfindungsgemäßen System mit der elektrischen Schutzanordnung beschriebenen Vorteile und Weiterbildungen gelten sinngemäß für das erfindungsgemäße Verfahren.

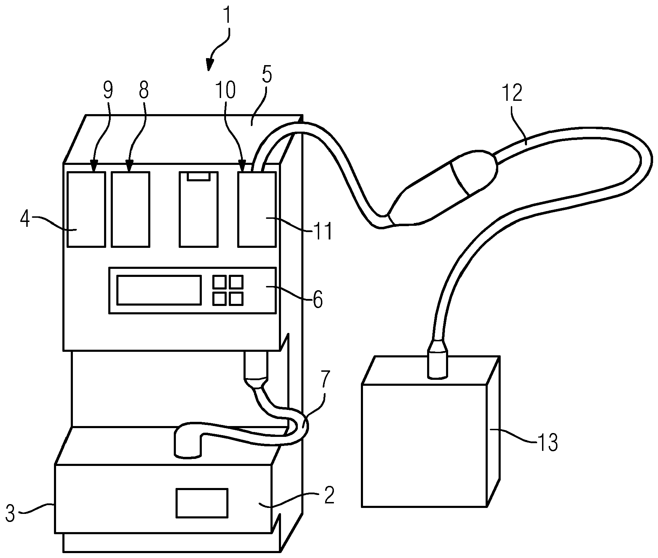

Die vorliegende Erfindung wird nun anhand der beigefügten Zeichnungen näher erläutert. Dabei zeigt die Figur eine schematische Darstellung einer elektrischen Schutzanordnung, die eine Fehlerstromschutzvorrichtung und einen Leistungsschalter umfasst.

Das nachfolgend näher geschilderte Ausführungsbeispiel stellt eine bevorzugte Ausführungsform der vorliegenden Erfindung dar.

Die vorliegend in der Figur schematisch dargestellte elektrische Schutzanordnung 1 umfasst eine Fehlerstromschutzvorrichtung 2, die auch als RCD (Residual Current Protective Device) bezeichnet werden kann. Die Fehlerstromschutzvorrichtung 2 kann ein Differenzstromgerät beziehungsweise ein Fehlerstromschutzgerät der bekannten Bauart sein. Dabei weist die Fehlerstromschutzvorrichtung 2, wie sie exemplarisch in der Figur dargestellt ist, ein Gehäuse 3 auf. Darüber hinaus umfasst die elektrische Schutzanordnung 1 einen Leistungsschalter 4, der in einem separaten Gehäuse 5 angeordnet ist. Das Gehäuse 3 der Fehlerstromschutzvorrichtung 2 und das Gehäuse 5 des Leistungsschalters 4 können formschlüssig miteinander verbunden werden. Typischerweise sind die Fehlerstromschutzvorrichtung 2 und der Leistungsschalter 4 in Schaltschränken untergebracht, wo sie an die entsprechenden Stromschienen angeschlossen sind.

Der Leistungsschalter 4 kann auch als Hauptschalter bezeichnet werden und dient zum Schalten von Strömen und Spannungen, wie sie beispielsweise in Produktionsanlagen, Wohngebäuden und dergleichen möglich sind. Der Leistungsschalter 4 umfasst üblicherweise eine hier nicht näher dargestellte elektrische Erfassungseinrichtung, die auch als ETU (Electronic Trip Unit) bezeichnet werden kann. Die elektrische Erfassungseinrichtung kann einen Stromwandler umfassen, mit dem Spannungen und elektrische Stromstärken in den elektrischen Leitungen erfasst werden können. Aus den Spannungen und/oder den elektrischen Stromstärken kann ermittelt werden, ob ein Überstrom oder ein Kurzschluss vorliegt. Darüber hinaus umfasst der Leistungsschalter 4 eine Auslöseeinrichtung 6, die vorliegend nur schematisch dargestellt ist. Mit der Auslöseeinrichtung 6 kann eine Schalteinrichtung des Leistungsschalters ausgelöst werden, falls mit der elektrischen Erfassungseinrichtung ein Überstrom und/oder ein Kurzschluss erfasst worden ist.

Die Fehlerstromschutzvorrichtung 2 umfasst eine hier nicht dargestellte Detektionseinrichtung, die in der Lage ist, einen Fehlerstrom oder einen Differenzstrom in der Elektroinstallation beziehungsweise in dem Netz zu detektieren. Bei der Detektionseinrichtung handelt es sich beispielsweise um ein Differenzstromschutzgerät oder ein Fehlerstromschutzgerät. Die Detektionseinrichtung umfasst einen Summenstromwandler, dessen Ausgangssignal von null verschieden ist, wenn ein Fehlerstrom oder ein Differenzstrom vorliegt. Das Ausgangssignal des Summenstromwandlers wird einer Recheneinheit der Fehlerstromschutzvorrichtung 2 zugeführt, mit der das Ausgangssignal mit einem Schwellenwert verglichen wird. Falls der Schwellenwert überschritte wird, wird ein entsprechendes Auslösesignal ausgegeben.

Vorliegend ist die Fehlerstromschutzvorrichtung 2 beziehungsweise deren Auswerteeinrichtung über ein Kabel 7 mit dem Leistungsschalter 4 zur Datenübertragung verbunden. Das Kabel 7 kann beispielsweise als Datenbus ausgebildet sein. Insbesondere ist das Kabel 7 mit der elektrischen Erfassungseinrichtung des Leistungsschalters 4 verbunden. Das Gehäuse 5 des Leistungsschalters 4 kann mehrere Zubehörtaschen umfassen. In dem vorliegenden Ausführungsbeispiel umfasst das Gehäuse 5 drei Zubehörtaschen 8, 9, 10. In der rechten Zubehörtasche 10 ist vorliegend ein Kommunikationsmodul 11 angeordnet. Das Kommunikationsmodul 11 ist zur Datenübertragung mit der elektrischen Erfassungseinrichtung des Leistungsschalters 4 verbunden. Somit wird eine Datenkommunikation zwischen der Fehlerstromschutzvorrichtung 2, insbesondere der Auswerteeinrichtung der Fehlerstromschutzvorrichtung 2, und dem Kommunikationsmodul 11 bereitgestellt.

Die Detektionseinrichtung der Fehlerstromschutzvorrichtung 2 kann in vorbestimmten zeitlichen Abständen Messwerte zu dem Fehlerstrom beziehungsweise zu dem Differenzstrom erfassen. Darüber hinaus können Zustandsdaten, die eine Information über den aktuellen Betriebszustand der Auswerteeinrichtung umfassen, bereitgestellt werden. Diese Daten können gegebenenfalls mit einer entsprechenden Recheneinrichtung der Fehlerstromschutzvorrichtung 2 digitalisiert werden und dann über die Auswerteeinrichtung über das Kabel 7 zu der elektronischen Erfassungseinrichtung und von dort an das Kommunikationsmodul 11 übertragen werden. Das Kommunikationsmodul 11 ist mit einem Kommunikationssystem verbunden. In dem vorliegenden Ausführungsbeispiel ist dies durch das Datenkabel 12 verdeutlicht. Das Datenkabel 12 ist wiederum mit einem Datensammler 13 verbunden, mit dem die Daten gesammelt und konzentriert werden können. Von dem Datensammler 13 kann eine weitere Datenverbindung zu einem Kommunikationssystem bestehen, das eine Leitwarte umfasst.

Über das Kommunikationsmodul 11 können zudem Daten für die Fehlerstromschutzvorrichtung 2 empfangen werden. Beispielsweise können mit dem Kommunikationsmodul 11 Betriebsdaten empfangen werden, mit denen ein Betriebszustand der Auswerteeinrichtung eingestellt werden kann. Beispielsweise kann ein Schwellenwert, ab dessen Überschreiten ein Auslösesignal ausgegeben wird, eingestellt werden. Ebenso kann eine zeitliche Verzögerung, nach deren Ablauf das Auslösesignal ausgegeben wird, eingestellt werden. Zudem ist es denkbar, dass mit der Kommunikationseinrichtung 11 ein Steuersignal empfangen wird, mit dem die Auslöseeinrichtung 6 angesteuert wird.

Somit können die elektrische Schutzanordnung 1 und insbesondere die Fehlerstromschutzvorrichtung 2 in ein Kommunikationssystem eingebunden werden. Das Kommunikationssystem kann beispielsweise nach dem PROFIBUS-Standard, dem PROFINET-Standard, dem Ethernet-Standard oder dergleichen ausgebildet sein. Durch das Kommunikationssystem ist keine Anwesenheit vor Ort mehr erforderlich, um aktuelle Informationen zum Fehlerstrom zu erhalten. Dadurch ergibt sich eine Zeitersparnis. Wenn die elektrische Schutzanordnung 1 beispielsweise in einer Anlage verwendet wird, wird die Überwachung der Anlage aus der Ferne ermöglicht. So kann beispielsweise eine rechtzeitige Vorwarnung bereitgestellt werden, wodurch Anlagenstillstände vermieden werden. Durch die Verwendung eines Bussystems ist keine Reichweitenbegrenzung zur Übertragung der Daten vorhanden. Darüber hinaus kann eine schnelle Fehlerdiagnose bereitgestellt werden. Schließlich wird durch Auslesen der Betriebsdaten der Fehlerstromschutzvorrichtung 2 ein schnellerer Gerätetausch möglich. Dadurch können Servicezeiten reduziert werden.

## Patentansprüche

1. System umfassend eine elektrische Schutzanordnung (1) für eine Elektroinstallation, wobei die elektrische Schutzanordnung (1) umfasst:
- eine Fehlerstromschutzvorrichtung (2), die eine Detektionseinrichtung zum Erfassen eines Fehlerstroms und eine Auswerteeinrichtung zum Vergleichen des erfassten Fehlerstroms mit einem Schwellenwert sowie zum Ausgeben eines Auslösesignals, falls der erfasste Fehlerstrom den Schwellenwert überschreitet, aufweist, und
- ein Kommunikationsmodul (11), das dazu ausgebildet ist, Fehlerstromdaten, die Informationen zu dem erfassten Fehlerstrom umfassen, zu senden und Betriebsdaten zum Einstellen eines Betriebszustands der Auswerteeinrichtung zu empfangen, **dadurch gekennzeichnet, dass**
- das System ein externes Kommunikationssystem umfasst, wobei
- das Kommunikationsmodul (11) mit dem externen Kommunikationssystem verbunden ist, das eine Leitwarte umfasst und
- die Fehlerstromschutzvorrichtung (2) über das Kommunikationssystem mit elektrischer Energie versorgt wird.

2. System nach Anspruch 1, wobei die Detektionseinrichtung dazu ausgebildet ist, eine Mehrzahl von zeitlich aufeinander folgenden Messwerten für den Fehlerstrom zu erfassen und wobei die Fehlerstromdaten die Mehrzahl von Messwerten umfasst.

3. System nach Anspruch 1 oder 2, wobei die Fehlerstromschutzvorrichtung eine Stelleinrichtung zum Einstellen des Betriebszustands der Auswerteeinrichtung in Abhängigkeit von den empfangenen Betriebsdaten umfasst.

4. System nach Anspruch 3, wobei als Betriebszustand der Schwellenwert und/oder eine zeitliche Verzögerung, nach deren Ablauf das Auslösesignal ausgegeben wird, einstellbar sind.

5. System nach einem der vorhergehenden Ansprüche, wobei die elektrische Schutzanordnung (1) eine Auslöseeinrichtung (6) zum Auslösen einer Schalteinrichtung umfasst und das Kommunikationsmodul (11) dazu ausgebildet ist, ein Steuersignal zum Auslösen der Auslöseeinrichtung (6) zu empfangen.

6. System nach einem der vorhergehenden Ansprüche, wobei das Kommunikationsmodul (11) dazu ausgebildet ist, Zustandsdaten, die eine Information über den aktuellen Betriebszustand der Auswerteeinrichtung umfassen, zu senden.

7. System (1) nach einem der vorhergehenden Ansprüche, wobei die elektrische Schutzanordnung (1) einen Leistungsschalter (4) umfasst, der eine elektrische Erfassungseinrichtung zum Erfassen eines Überstroms und/oder eines Kurzschlusses aufweist, der Leistungsschalter in einem separaten Gehäuse (5) angeordnet ist, das eine Mehrzahl von Zubehörtaschen (8, 9, 10) aufweist, und das Kommunikationsmodul (11) in einer der Mehrzahl von Zubehörtaschen (8, 9, 10) angeordnet ist.

8. System nach Anspruch 7, wobei die Fehlerstromschutzvorrichtung (2) über ein Datenkabel (7) mit der elektrischen Erfassungseinrichtung des Leistungsschalters (4) verbunden ist und die elektrische Erfassungseinrichtung mit dem Kommunikationsmodul (11) verbunden ist.

9. Verfahren zum Betreiben eines Systems mit einer elektrischen Schutzanordnung (1) für eine Elektroinstallation durch
- Erfassen eines Fehlerstroms mit einer Detektionseinrichtung einer Fehlerstromschutzvorrichtung (2),
- Vergleichen des erfassten Fehlerstroms mit einem Schwellenwert mit einer Auswerteeinrichtung der Fehlerstromschutzvorrichtung (2),
- Ausgeben eines Auslösesignals, falls der erfasste Fehlerstrom den Schwellenwert überschreitet, mit der Auswerteeinrichtung,
- Senden von Fehlerstromdaten, die Informationen zu dem erfassten Fehlerstrom umfassen, mit einem Kommunikationsmodul (11) und
- Empfangen von Betriebsdaten zum Einstellen eines Betriebszustands der Auswerteeinrichtung mit dem Kommunikationsmodul (11),
**gekennzeichnet durch**
- Versorgen der Fehlerstromschutzvorrichtung (2) mit elektrischer Energie über ein externes Kommunikationssystem des Systems, wobei das externe Kommunikationssystem mit dem Kommunikationsmodul (11) verbunden ist und eine Leitwarte umfasst.

## Claims

1. System comprising an electrical protective arrangement (1) for an electrical installation, wherein the electrical protective arrangement (1) comprises:
- a fault current protection apparatus (2) that has a detection device for sensing a fault current and an evaluation device for comparing the sensed fault current with a threshold value and for outputting a tripping signal if the sensed fault current exceeds the threshold value, and
- a communication module (11) designed to send fault current data that comprise information pertaining to the sensed fault current and to receive operating data for setting an operating state of the evaluation device,
**characterized in that**
- the system comprises an external communication system, wherein
- the communication module (11) is connected to the external communication system, which comprises a control room, and
- the fault current protection apparatus (2) is supplied with electric power by means of the communication system.

2. System according to Claim 1, wherein the detection device is designed to sense a plurality of temporally successive measured values for the fault current and wherein the fault current data comprise the plurality of measured values.

3. System according to Claim 1 or 2, wherein the fault current protection apparatus comprises an adjusting device for setting the operating state of the evaluation device on the basis of the received operating data.

4. System according to Claim 3, wherein the operating state that can be set is the threshold value and/or a time delay after which the tripping signal is output.

5. System according to one of the preceding claims, wherein the electrical protective arrangement (1) comprises a tripping device (6) for tripping a switching device, and the communication module (11) is designed to receive a control signal for tripping the tripping device (6).

6. System according to one of the preceding claims, wherein the communication module (11) is designed to send state data that comprise a piece of information about the present operating state of the evaluation device.

7. System (1) according to one of the preceding claims, wherein the electrical protective arrangement (1) comprises a circuit breaker (4) that has an electrical sensing device for sensing an overcurrent and/or a short, the circuit breaker is arranged in a separate housing (5) that has a plurality of accessory pockets (8, 9, 10), and the communication module (11) is arranged in one of the plurality of accessory pockets (8, 9, 10) .

8. System according to Claim 7, wherein the fault current protection apparatus (2) is connected to the electrical sensing device of the circuit breaker (4) by means of a data cable (7), and the electrical sensing device is connected to the communication module (11).

9. Method for operating a system having an electrical protective arrangement (1) for an electrical installation by
- sensing a fault current using a detection device of a fault current protection apparatus (2),
- comparing the sensed fault current with a threshold value using an evaluation device of the fault current protection apparatus (2),
- outputting a tripping signal if the sensed fault current exceeds the threshold value using the evaluation device,
- sending fault current data that comprise information pertaining to the sensed fault current using a communication module (11), and
- receiving operating data for setting an operating state for the evaluation device using the communication module (11), **characterized by**
- supplying the fault current protection apparatus (2) with electric power by means of an external communication system of the system, wherein the external communication system is connected to the communication module (11) and comprises a control room.

## Revendications

1. Système comprenant un montage de protection électrique (1) destiné à une installation électrique, ce montage de protection électrique (1) comprenant:
- un appareil de protection contre les courants de fuite (2) comportant un dispositif de détection destiné à la détection d'un courant de fuite et un dispositif de traitement destiné à la comparaison du courant de fuite détecté avec une valeur de seuil ainsi qu'à l'émission d'un signal de déclenchement pour le cas où le courant de fuite détecté dépasse positivement la valeur de seuil, et
- un module de communication (11) configuré pour envoyer des données de courant de fuite, lesquelles comprennent des informations relatives au courant de fuite détecté, et pour recevoir les données de fonctionnement en vue du réglage d'un état de fonctionnement du dispositif de traitement, **caractérisé en ce que**
- le système comprend un système de communication externe,
- ce module de communication (11) étant raccordé au système de communication externe, lequel comprend un poste de supervision, et
- l'appareil de protection contre les courants de fuite (2) étant alimenté en énergie électrique par le biais du système de communication.

2. Système selon la revendication 1, le dispositif de détection étant configuré pour détecter une pluralité de valeurs de mesure successives dans le temps pour le courant de fuite et les données de courant de fuite comprenant cette pluralité de valeurs de mesure.

3. Système selon la revendication 1 ou 2, l'appareil de protection contre les courants de fuite comprenant un dispositif de réglage destiné à régler l'état de fonctionnement du dispositif de traitement en fonction des données de fonctionnement reçues.

4. Système selon la revendication 3, la valeur de seuil et/ou un retard temporel, à l'expiration duquel le signal de déclenchement est émis, pouvant être réglés comme l'état de fonctionnement.

5. Système selon l'une des revendications précédentes, le montage de protection électrique (1) comprenant un dispositif de déclenchement (6) destiné au déclenchement d'un dispositif de commutation et le module de communication (11) étant configuré pour recevoir un signal de commande pour le déclenchement du dispositif de déclenchement (6).

6. Système selon l'une des revendications précédentes, le module de communication (11) étant configuré pour envoyer des données d'état, lesquelles comprennent des informations relatives à l'état de fonctionnement instantané du dispositif de traitement.

7. Système (1) selon l'une des revendications précédentes, le montage de protection électrique (1) comprenant un disjoncteur (4) comportant un dispositif de détection électrique pour la détection d'un courant de surcharge et/ou d'un court-circuit, ce disjoncteur se trouvant dans un coffret (5) séparé comportant une pluralité de poches à accessoires (8, 9, 10), et le module de communication (11) se trouvant dans une de la pluralité de poches à accessoires (8, 9, 10).

8. Système selon la revendication 7, l'appareil de protection contre les courants de fuite (2) étant raccordé par un câble de données (7) avec le dispositif de détection électrique du disjoncteur (4) et le dispositif de détection électrique étant raccordé au module de communication (11).

9. Procédé de fonctionnement d'un système avec montage de protection électrique (1) destiné à une installation électrique par
- détection d'un courant de fuite avec un dispositif de détection d'un appareil de protection contre les courants de fuite (2),
- comparaison du courant de fuite détecté avec une valeur de seuil à l'aide d'un dispositif de traitement de l'appareil de protection contre les courants de fuite (2),
- émission d'un signal de déclenchement dans le cas où le courant de fuite détecté dépasse positivement la valeur de seuil, à l'aide du dispositif de traitement,
- envoi de données de courant de fuite, lesquelles comprennent des informations relatives au courant de fuite détecté, à l'aide d'un module de communication (11), et
- réception de données de fonctionnement en vue du réglage d'un état de fonctionnement du dispositif de traitement avec le module de communication (11),
**caractérisé par**
- l'alimentation de l'appareil de protection contre les courants de fuite (2) avec de l'énergie électrique par un système de communication externe du système, ce système de communication externe étant raccordé au module de communication (11) et comprenant un poste de supervision.
